# EUROPÄISCHE PATENTANMELDUNG

(11) **EP 1 501 132 A2**
(43) Veröffentlichungstag der Anmeldung: **26.01.2005**
(21) Anmeldenummer: 04015483.3
(22) Anmeldetag: 01.07.2004
(51) Int. Cl.: H01L 31/045, B64G 1/44, B64G 1/22

(54) **Solargenerator zur Entfaltung in zwei Raumrichtungen**

(30) Priorität: 25.07.2003 DE 10334352
(71) Anmelder: EADS Astrium GmbH, 81663 München (DE)
(72) Erfinder: Closs, Martin F., Dr., 80469 München (DE)
(74) Vertreter: Ulrich, Thomas

(57) **Zusammenfassung**

Die Erfindung betrifft einen faltbaren Solargenerator, umfassend ein faltbares Solargenerator-Paneel (1) und eine Stützstruktur (2) zur Versteifung des faltbaren Solargenerator-Paneels, wobei der faltbare Solargenerator Einrichtungen zur gleichzeitigen Entfaltung des faltbaren Solargenerator-Paneels (1) in zwei Raumrichtungen aufweist.

## Beschreibung

Die vorliegende Erfindung betrifft einerseits einen entfaltbaren Solargenerator, umfassend ein faltbares Solargenerator-Paneel und eine Stützstruktur zur Versteifung des faltbaren Solargenerator-Paneels, andererseits ein Verfahren zur Faltung und Entfaltung eines entfaltbaren Solargenerators.

Solargeneratoren mit Stützstrukturen zur Versteifung des Solargenerator-Paneels sind aus dem Stand der Technik bereits aus DE 1 257 593 sowie aus DE 1 801 777 bekannt. Beide Dokumente beschreiben jeweils ein flexibles Solargenerator-Paneel, das durch eine Stützstruktur stabilisiert wird, die als Rahmenstruktur aus aufblasbaren Schläuchen ausgebildet ist. Das Solargenerator-Paneel bildet dabei jeweils einen Ausleger, der entweder durch Entfaltung oder durch Abwickeln in lediglich eine Raumrichtung entfaltet oder ausgerollt wird. Eine vergleichbare Einrichtung ist aus JP 2001-106 196 A bekannt.

EP 0 754 625 beschreibt einerseits flexible Solargeneratoren, die eine Stützstruktur aus starre Streben zur Versteifung eines flexiblen Solargenerator-Paneels aufweisen, andererseits werden dort hybride Solargeneratoren beschrieben, sie sowohl starre als auch flexible Solargenerator-Paneele aufweisen.

US 6,423,895 beschreibt einen entfaltbaren, flexiblen Solargenerator, der mit Hilfe einer Strebenstruktur mit Querträgern in eine Raumrichtung entfaltet wird und im entfalteten Zustand durch die Streben und Querträger stabilisiert wird.

WO 2003/077324 A1 beschreibt eine sequentielle Entfaltung eines Solargenerator-Paneels zuerst in eine erste Raumrichtung, gefolgt von einer Entfaltung in eine zweite Raumrichtung. Dabei sind zur Versteifung des Solargenerator-Paneels Längsrippen vorgesehen.

Nachteilig an solchen Solargeneratoren nach dem Stand der Technik ist jedoch der relativ hohe Bedarf an Stauraum zur Unterbringung der Solargeneratoren. Dies ist insbesondere nachteilig für eine Anwendung der Solargenerationen in der Raumfahrt, da an Raumfahrzeugen nur ein sehr begrenzter Stauraum zur Verfügung steht und eine optimale Ausnutzung des vorhandenen Stauraumes zur Unterbringung von Betriebskomponenten und Nutzlastkomponenten an Raumfahrzeugen aus wirtschaftlichen und technischen Aspekten äußerst wichtig ist. Auch tritt bei Anwendungen in der Raumfahrt das Problem auf, dass Solargeneratoren, die viel Stauraum benötigen und insbesondere im gestauten Zustand lange Pakete oder Rollen bilden, die Lageregelungseigenschaften des Raumfahrzeuges nachteilig beeinflussen, da das Trägheitsmoment einer Struktur quadratisch von der Länge der Struktur abhängt. Solche Momente treten gerade bei mehrfachen Entfaltungsvorgängen besonders störend auf.

Aufgabe der vorliegenden Erfindung ist es daher, Lösungen für Solargeneratoren bereitzustellen, die ein kompakteres Verstauen von Solargeneratoren und eine Entfaltung mit möglichst geringen Störmomenten gestatten. Diese Aufgabe wird gelöst durch die Merkmale der Ansprüche 1 und 10.

Ein erster Gegenstand der vorliegenden Erfindung betrifft einen entfaltbaren, insbesondere einen flexiblen Solargenerator, umfassend ein faltbares Solargenerator-Paneel und eine Stützstruktur zur Versteifung des faltbaren Solargenerator-Paneels. Der entfaltbare Solargenerator weist Einrichtungen zur Entfaltung des faltbaren Solargenerator-Paneels in zwei Raumrichtungen auf. Gemäß der vorliegenden Erfindung ist vorgesehen, dass die Einrichtungen zur Entfaltung des faltbaren Solargenerator-Paneels zur gleichzeitigen Entfaltung in zwei Raumrichtungen ausgebildet sind. Durch die Entfaltbarkeit des Solargenerator-Paneels in zwei Raumrichtungen ist ein kompakteres Verstauen des Solargenerator-Paneels möglich als bei den Anordnungen nach dem Stand der Technik die nur in eine Raumrichtung entfaltbar sind und deren Solargenerator-Paneele im gefalteten Zustand längliche Pakete oder Rollen bilden. Wenn hier ein rein flexibles Solargenerator-Paneel gewählt wird, ergibt sich auch ein entscheidender Vorteil gegenüber hybriden Paneel-Strukturen, wie sie aus dem Stand der Technik bekannt sind, bei denen zur Stabilisierung der Anordnung starre Paneele mit großen Ausmaßen zwingend vorgesehen werden müssen. Durch die Ausbildung des Solargenerators für eine gleichzeitige Entfaltung in beide Raumrichtungen können weiterhin die bei der Entfaltung auftretenden Störmomente zeitlich wie idealerweise auch betragsmäßig minimiert werden.

Bevorzugt kann die Stützstruktur gleichzeitig als Einrichtung zur gleichzeitigen zweidimensionalen Entfaltung ausgebildet sein. Es ist damit nicht nötig, eine von der Stützstruktur separate Einrichtung zur zweidimensionalen Entfaltung vorzusehen, sondern die Stützstruktur erfüllt beide Funktionen: einerseits das Entfalten des faltbaren Solargenerators vom gefalteten in den entfalteten Zustand und andererseits die Stabilisierung des faltbaren Solargenerators im entfalteten Zustand. Damit kann die Zahl der nötigen Komponenten reduziert werden und somit die Masse der gesamten Anordnung minimiert werden. Dies ist insbesondere für Raumfahrt-Anwendungen von hoher Bedeutung.

Insbesondere kann vorgesehen sein, dass die Stützstruktur zumindest teilweise als aufblasbare Struktur ausgebildet ist. Dadurch kann auf sehr einfache und sichere Weise ein Entfalten des Solargenerators realisiert werden, da durch aufblasbare Strukturen fehleranfällige, mechanische Aktuatoren vermieden werden können. Es kann zusätzlich vorgesehen werden, dass nach einem Aufblasen der Struktur ein Aushärten der Struktur, insbesondere ein Aushärten der Stützstruktur, erfolgt, entweder durch chemische Einwirkung wie beispielsweise durch chemische Reaktionen von Substanzen, die beim Aufblasen eingeführt werden, oder durch physikalische Einwirkung, beispielsweise durch Einwirkung von Sonnenstrahlung auf die entfaltete Struktur. Es ist also in diesem Fall eine zumindest teilweise aufblasbare Struktur als Stützstruktur vorgesehen, die neben der Aufgabe der Versteifung des Solargenerators im entfalteten Zustand des Solargenerator-Paneels auch gleichzeitig zur Durchführung des Entfaltens des Solargenerator-Paneels verwendet werden kann. Damit werden separate Einrichtungen für das Entfalten und die Stabilisierung des Solargenerator-Paneels entbehrlich. Aufblasbare Strukturen mit zweidimensionaler Ausdehnung wie beispielsweise Schlauchstrukturen erlauben auch auf sehr einfache Weise die Realisierung der erfindungsgemäßen gleichzeitigen Entfaltung in zwei Raumrichtungen. Grundsätzlich kann aber als Stützstruktur und Einrichtung zur gleichzeitigen zweidimensionalen Entfaltung auch jede andere Art von Struktur verwendet werden, beispielsweise eine geeignete Anordnung von vorgespannten elastischen Stützelementen wie elastische Rohre oder Blattfedern.

Eine spezielle Weiterbildung dieses Erfindungsgegenstandes sieht vor, dass die Stützstruktur als aufblasbare Rahmenstruktur ausgebildet ist, die das Solargenerator-Paneel umschließt. Dabei wird also auf mechanische Entfalt-Einrichtungen komplett verzichtet. Weiterer Vorteil ist, dass das Entfalten in zwei Raumrichtungen, und aufgrund der Rahmenstruktur gerade das erfindungsgemäße gleichzeitige Entfalten in zwei Raumrichtungen, in einem einzigen Vorgang durch Aufblasen der Rahmenstruktur erfolgen kann. Weiter bildet eine solche Rahmenstruktur eine ideale Stabilisierung für ein faltbares Solargenerator-Paneel wie beispielsweise ein flexibles Solargenerator-Paneel.

Eine vorteilhafte Weiterbildung dieses Erfindungsgegenstandes sieht vor, dass das Solargenerator-Paneel im gefalteten Zustand zunächst in eine erste Raumrichtung gefaltet ist und anschließend in eine zweite Raumrichtung gefaltet ist. Es kann dabei eine einmalige oder mehrmalige Faltung in eine erste Raumrichtung und anschließend eine einmalige oder mehrmalige Faltung in eine zweite Raumrichtung erfolgen. So kann beispielsweise ein viereckiges Solargenerator-Paneel zunächst Zickzack-förmig in eine erste Raumrichtung und anschließend Zickzack-förmig in eine zweite Raumrichtung gefaltet werden. Das entstehende Paket ist dann wiederum viereckig, aber mit deutlich kleineren Ausmaßen als ein Paket, das nur durch Faltung in eine Raumrichtung entsteht. Für andere Formen von Solargenerator-Paneelen wie dreieckig oder rund kann auch eine andere, gegebenenfalls geeignetere Faltungsart gewählt werden.

Die Erfindung betrifft also einen entfaltbaren Solargenerator, umfassend ein faltbares Solargenerator-Paneel und eine Stützstruktur zur Versteifung des faltbaren Solargenerator-Paneels. Gemäß der Erfindung ist insbesondere vorgesehen, dass die Stützstruktur des entfaltbaren Solargenerators zumindest teilweise als aufblasbare Struktur zur Entfaltung des Solargenerator-Paneels in zwei Raumrichtungen ausgebildet ist. Es ist in diesem Fall eine zumindest teilweise aufblasbare Struktur als Stützstruktur vorgesehen, die neben der Aufgabe der Versteifung des Solargenerators im entfalteten Zustand des Solargenerator-Paneels auch gleichzeitig zur Durchführung des Entfaltens des Solargenerator-Paneels verwendet wird. Damit werden separate Einrichtungen für das Entfalten und die Stabilisierung des Solargenerator-Paneels entbehrlich.

Ein faltbarer Solargenerator nach der vorliegenden Erfindung kann grundsätzlich flexible und/oder starre Paneele aufweisen. Ist zusätzlich oder statt einem flexiblen Solargenerator-Paneel mindestens ein Solargenerator-Paneel mit gewissen starren Eigenschaften vorgesehen, so kann dieses bevorzugt aus starren Sub-Paneelen gebildet werden, die untereinander durch Schwenkverbindungen verbunden sind. Diese Schwenkverbindungen verbinden jeweils zwei Sub-Paneelen miteinander und ermöglichen, dass die Paneele um eine Achse gegeneinander geschwenkt werden können. Die Schwenkverbindungen können beispielsweise als Gelenke oder flexible Elemente wie z.B. flächige Federelemente ausgebildet sind.

Auch für diese Ausführungsform der Erfindung mit starren Sub-Paneelen kann vorgesehen werden, dass die Stützstruktur als aufblasbare Rahmenstruktur ausgebildet ist. Die entsprechenden Vorteile und weiteren möglichen Details einer solchen Struktur wurden bereits oben beschrieben.

Weiterhin kann auch bei dieser Ausführungsform der Erfindung vorgesehen werden, dass das Solargenerator-Paneel im gefalteten Zustand zunächst in eine erste Raumrichtung gefaltet ist und anschließend in eine zweite Raumrichtung gefaltet ist. Auch hier wird für Vorteile und weitere Details auf die bereits oben erfolgten Ausführungen verwiesen.

Wie bereits erwähnt kann ein Solargenerator nach der vorliegenden Erfindung insbesondere in einem Raumfahrzeug Verwendung finden. Ein solches Raumfahrzeug kann entweder ein Satellit, eine Raumsonde, eine Trägerrakete, eine Raumfähre oder eine Raumstation sein.

Ein weiterer Gegenstand der vorliegenden Erfindung ist ein Verfahren zur Faltung und Entfaltung eines entfaltbaren Solargenerators, umfassend ein faltbares Solargenerator-Paneel und eine Stützstruktur zur Versteifung des faltbaren Solargenerator-Paneels. Gemäß der vorliegenden Erfindung ist vorgesehen, dass eine gleichzeitige Entfaltung des faltbaren Solargenerator-Paneels in zwei Raumrichtungen erfolgt. Durch die gleichzeitige Entfaltung des Solargenerator-Paneels in zwei Raumrichtungen ist ein kompakteres Verstauen des Solargenerator-Paneels möglich als bei den Anordnungen nach dem Stand der Technik die nur in eine Raumrichtung entfaltbar sind und deren Solargenerator-Paneele im gefalteten Zustand längliche Pakete oder Rollen bilden. Weiterhin werden die bei der Entfaltung auftretenden Störmomente zeitlich wie idealerweise auch betragsmäßig minimiert.

Dabei kann insbesondere vorgesehen werden, dass die gleichzeitige Entfaltung in zwei Raumrichtungen zumindest teilweise durch Aufblasen von aufblasbaren Elementen der Stützstruktur erfolgt. Für weitere Details hierzu wird grundsätzlich auf die bereits erfolgten Ausführungen zu den oben genannten Anordnungen im Rahmen der Erfindung verwiesen.

Eine Faltung des Solargenerator-Paneels kann insbesondere zunächst in eine erste Raumrichtung und anschließend in eine zweite Raumrichtung erfolgen. Es kann dabei eine einmalige oder mehrmalige Faltung in eine erste Raumrichtung und anschließend eine einmalige oder mehrmalige Faltung in eine zweite Raumrichtung erfolgen. So kann beispielsweise ein viereckiges Solargenerator-Paneel zunächst Zickzack-förmig in eine erste Raumrichtung und anschließend Zickzack-förmig in eine zweite Raumrichtung gefaltet werden. Das entstehende Paket ist dann wiederum viereckig, aber mit deutlich kleineren Ausmaßen als ein Paket, das nur durch Faltung in eine Raumrichtung entsteht. Für andere Formen von Solargenerator-Paneelen wie dreieckig oder rund kann auch eine andere, gegebenenfalls geeignetere Faltungsart gewählt werden. Die gleichzeitige Entfaltung in zwei Raumrichtungen erfolgt bevorzugt durch ein Aufblasen einer rahmenförmigen Stützstruktur, welche das Solargenerator-Paneel umschließt.

Eine spezielle Ausführungsform der vorliegenden Erfindung wird nachfolgend anhand der Figuren 1 bis 7 erläutert.

Es zeigen:
- Fig. 1:: Entfaltung eines erfindungsgemäßen Solargenerators in eine erste Raumrichtung
- Fig. 2:: Entfaltung eines erfindungsgemäßen Solargenerators in eine zweite Raumrichtung
- Fig. 3:: Erfindungsgemäßer Solargenerator mit aufblasbarer Rahmenstruktur in gefaltetem Zustand
- Fig. 4:: Erfindungsgemäße Solargenerator mit aufblasbarer Rahmenstruktur nach Fig. 3 in entfaltetem Zustand
- Fig. 5:: Ausschnittsdarstellung eines Solargenerators nach Fig. 1 mit starren Sub-Panels
- Fig. 6:: Darstellung analog Fig. 1 für einen Solargenerator mit starren Sub-Panels
- Fig. 7:: Darstellung analog Fig. 2 für einen Solargenerator mit starren Sub-Panels

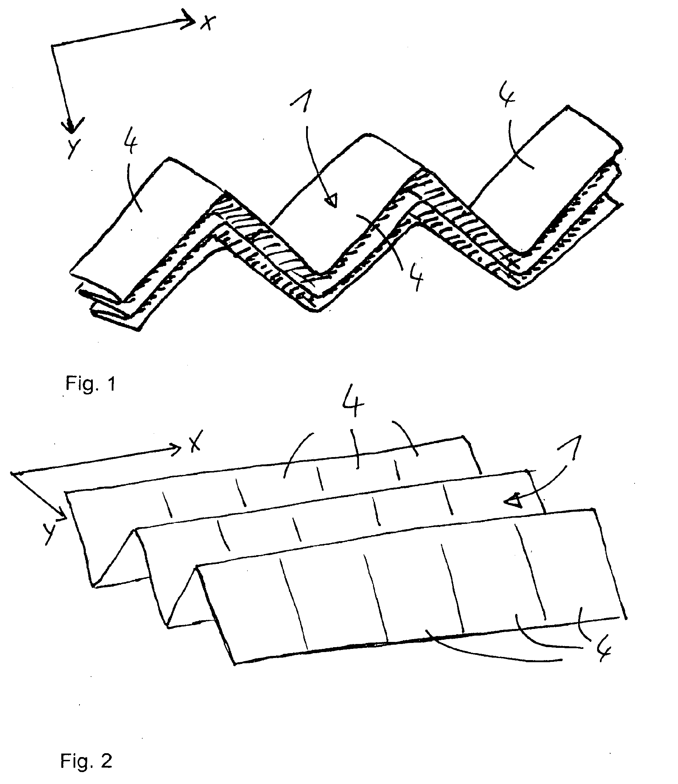

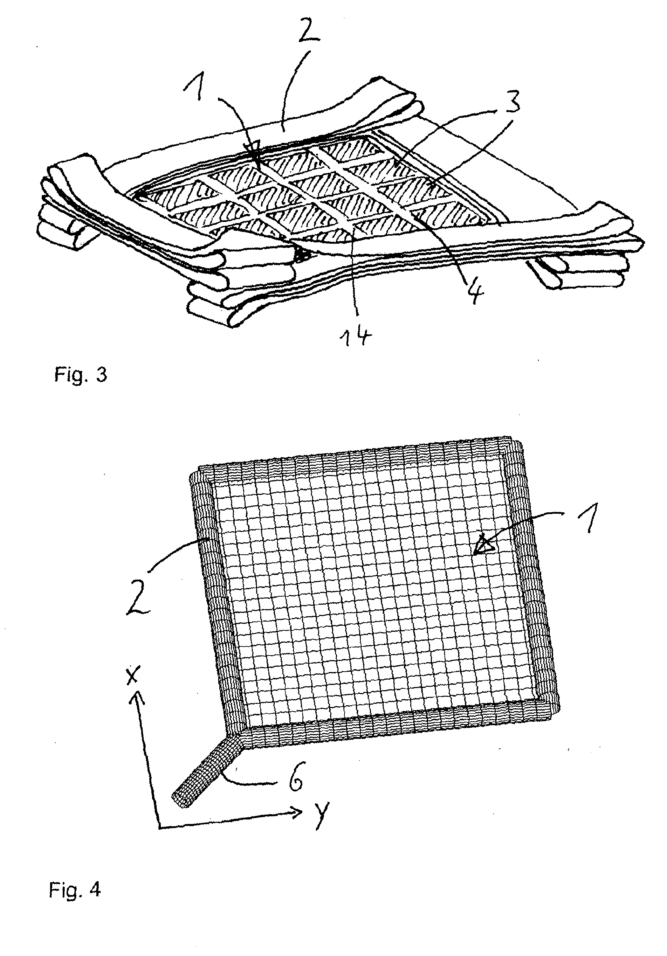

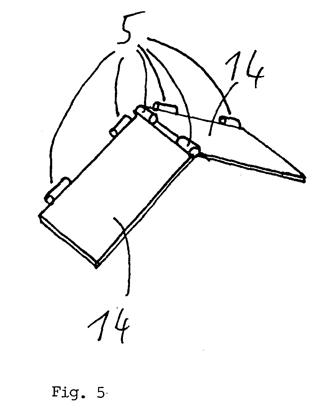

Fig. 1 und 2 zeigen die Entfaltung eines Solargenerators mit einem Solargenerator-Paneel 1 gemäß der vorliegenden Erfindung in zwei Raumrichtungen x, y. Das Solargenerator-Paneel 1 kann dabei entweder als einheitliches, flexibles Paneel ausgebildet sein, welches durch Faltung in einzelne Unterbereiche 4 unterteilt wird. Das Solargenerator-Paneel kann aber auch aus einzelnen, starren Sub-Paneelen 14 gebildet werden, die durch Schwenkverbindungen 5 untereinander verbunden sind, wie in Fig. 5 bis 7 dargestellt. Ein flexibles Solargenerator-Paneel kann beispielsweise aus einer Substratfolie bestehen, auf die ebenfalls flexible Solarzellen oder Solarzellen-Module 3, beispielsweise Dünnfilm-Solarzellen oder entsprechende Module, aufgebracht sind (siehe dazu auch Fig. 3).

In beiden Fällen erfolgt eine Entfaltung des gefalteten Solargenerator-Paneels 1 in eine erste Raumrichtung x und in eine zweite Raumrichtung y. Diese Entfaltung kann zwar prinzipiell zunächst nur in die erste Raumrichtung x und anschließend nur in die zweite Raumrichtung y erfolgen, wie für verschiedene Anordnungen aus dem Stand der Technik bekannt. Gemäß der Erfindung erfolgt jedoch die Entfaltung in die beiden Raumrichtungen x, y praktisch gleichzeitig.

Die Faltung des Solargenerator-Paneels 1 zum Verstauen des Solargenerators vor der Entfaltung erfolgt folgendermaßen: Es erfolgt zuerst eine Faltung des Solargenerator-Paneels in eine erste Raumrichtung y analog Fig. 2, anschließend erfolgt eine weitere Faltung des bereits gefalteten Solargenerator-Paneels 1 in eine zweite Raumrichtung x. Bei einem flexiblen Solargenerator-Paneel 1 ist eine solche Faltung aufgrund der flexiblen Eigenschaften des Solargenerator-Paneels 1 ohne weiteres möglich.

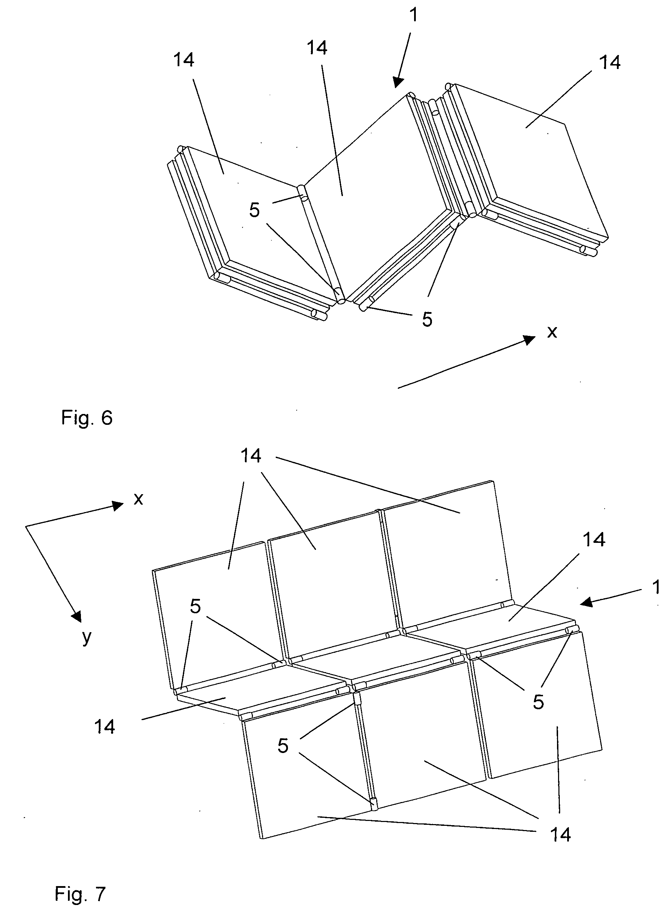

Bei einem Solargenerator-Paneel 1, das aus starren Sub-Paneelen 14 entsprechend Fig. 5 bis 7 besteht, wird diese Faltung durch Schwenkverbindungen 5 wie Gelenke oder Federn ermöglicht, welche die Sub-Paneelen 14 untereinander verbinden. Dazu sind bei viereckigen Sub-Paneelen 14 entsprechende Schwenkverbindungen 5 zumindest an jeweils zwei Seitenkanten der Sub-Paneelen 14 angebracht. Figuren 6 und 7 zeigen in analoger Weise zu Fig. 1 und 2 die Faltung eines Solargenerator-Paneels 1 aus starren Sub-Paneelen 14 zunächst in eine erste Raumrichtung y, anschließend in eine zweite Raumrichtung x.

Zum Entfalten des Solargenerator-Paneels 1 ist eine aufblasbare Struktur 2 vorgesehen, die neben der Durchführung des Entfaltens auch gleichzeitig im entfalteten Zustand des Solargenerator-Paneels 1 als Stützstruktur zur Versteifung des Solargenerators dient. Die aufblasbare Struktur 2 kann durch Schläuche oder schlauchähnliche Gebilde realisiert werden, wobei in Fig. 4 die Schläuche eine rahmenförmige Struktur bilden. Durch eine Zuführung 6 kann Druckluft oder ein sonstiges Gas in die Schläuche 2 geleitet werden, so dass diese aufgeblasen werden. Es kann die gesamte rahmenförmige Struktur der Schläuche 2 gleichzeitig aufgeblasen werden, wodurch eine Entfaltung des Solargenerator-Paneels 1 in beide Raumrichtungen x, y gleichzeitig erfolgt. Es könnte aber prinzipiell auch durch eine entsprechende Auslegung der Schläuche und deren Verbindungen zur Zuführung (beispielsweise durch separate Zuführungen, Ventile oder ähnliches) zuerst die Schläuche 2 aufgeblasen werden, die sich in eine erste Raumrichtung x erstrecken, und anschließend die Schläuche, die sich in eine zweite Raumrichtung y erstrecken, um zuerst eine Entfaltung in x-Richtung und anschließend eine Entfaltung in y-Richtung zu realisieren. Das Material der Schläuche und/oder die zum Aufblasen der Schläuche zugeführten Gase und eventuelle beigemischte Substanzen können so ausgelegt werden, dass nach dem Aufblasen eine Versteifung der Schläuche 2 bzw. eine Aushärtung der Schläuche 2 durch chemische und/oder physikalische Prozesse erfolgt, um eine dauerhafte Stabilität der Schläuche 2 zu garantieren.

Fig. 3 zeigt einen viereckigen, insbesondere quadratischen Solargenerator nach Fig. 1 und 2 oder nach Fig. 5 bis 7 im gefalteten Zustand, der gemäß der umgekehrten Abfolge der Fig. 1 und 2 bzw. 6 und 7 gefaltet wurde, wie bereits oben beschrieben. Es ergibt sich dabei ein ebenfalls viereckiges, insbesondere quadratisches Paket, das sehr kompakte Ausmaße besitzt. Hingegen ergibt sich bei Faltung eines Solargenerators nach den Verfahren des Standes der Technik jeweils ein relativ langes Paket, was sich insbesondere bei Anwendungen in der Raumfahrt negative Einflüsse auf die Lageregelung eines Raumfahrzeuges mit sich bringt. Neben der Möglichkeit der einfacheren Unterbringung ergibt sich bei der vorliegenden Erfindung durch das kompaktere Paket auch die Möglichkeit, den Solargenerator mit wenigen Anpassungen für viele verschiedene Anwendungsgebiete einzusetzen, insbesondere im Raumfahrtbereich für viele verschiedene Arten und Missionen von Raumfahrzeugen. Dabei liegen nun die noch nicht aufgeblasenen Schläuche 2 im Randbereich des Pakets aufeinander. Im Innenbereich des Pakets liegen, je nach Ausführungsform der Erfindung, die Unterbereiche 4 oder die starren Sub-Paneelen 14 des Solargenerator-Paneels 1 aufeinander, die wiederum Solarzellen oder Solarzellen-Module 3 aufweisen.

Die Erfindung besitzt den Vorteil, dass der Solargenerator einerseits mit einem Minimum an Einrichtungen zur Entfaltung und Stabilisierung auskommt, und so die Masse des Solargenerators minimiert werden kann, andererseits durch die kompakte Faltung und die gleichzeitige Entfaltbarkeit in zwei Raumrichtungen eine größtmögliche Solarpaneel-Fläche im gefalteten Zustand auf kleinstmöglichem Raum verstaut werden kann, um störende Einflüsse durch den Solargenerator auf andere Strukturen möglichst zu minimieren.

## Patentansprüche

1. Entfaltbarer Solargenerator, umfassend ein faltbares Solargenerator-Paneel (1) und eine Stützstruktur (2) zur Versteifung des faltbaren Solargenerator-Paneels (1), wobei der flexible Solargenerator Einrichtungen (2) zur Entfaltung des faltbaren Solargenerator-Paneels (1) in zwei Raumrichtungen (x, y) aufweist, **dadurch gekennzeichnet, dass** die Einrichtungen (2) zur Entfaltung des faltbaren Solargenerator-Paneels (1) zur gleichzeitigen Entfaltung in zwei Raumrichtungen (x, y) ausgebildet sind.

2. Entfaltbarer Solargenerator nach Anspruch 1, **dadurch gekennzeichnet, dass** die Stützstruktur (2) gleichzeitig als Einrichtung zur gleichzeitigen zweidimensionalen Entfaltung ausgebildet ist.

3. Entfaltbarer Solargenerator nach Anspruch 1 oder 2, **dadurch gekennzeichnet, dass** die Stützstruktur (2) zumindest teilweise als aufblasbare Struktur ausgebildet ist.

4. Entfaltbarer Solargenerator nach Anspruch 3, **dadurch gekennzeichnet, dass** die Stützstruktur (2) als aufblasbare Rahmenstruktur ausgebildet ist, die das Solargenerator-Paneel (1) umschließt.

5. Entfaltbarer Solargenerator nach einem der Ansprüche 1 bis 4, **dadurch gekennzeichnet, dass** das Solargenerator-Paneel (1) im gefalteten Zustand zunächst in eine erste Raumrichtung (y) gefaltet ist und anschließend in eine zweite Raumrichtung (x) gefaltet ist.

6. Entfaltbarer Solargenerator nach einem der Ansprüche 1 bis 5, **dadurch gekennzeichnet, dass** das Solargenerator-Paneel (1) flexibel ausgebildet ist.

7. Entfaltbarer Solargenerator nach einem der Ansprüche 1 bis 6, **dadurch gekennzeichnet, dass** das Solargenerator-Paneel (1) aus starren Sub-Paneelen (14) gebildet ist, die untereinander durch Schwenkverbindungen (5) verbunden sind.

8. Entfaltbarer Solargenerator nach Anspruch 7, **dadurch gekennzeichnet, dass** die Schwenkverbindungen (5) als Gelenke oder flexible Elemente ausgebildet sind.

9. Raumfahrzeug, aufweisend einen Solargenerator nach einem der Ansprüche 1 bis 8.

10. Verfahren zur Faltung und Entfaltung eines entfaltbaren Solargenerators, umfassend ein faltbares Solargenerator-Paneel (1) und eine Stützstruktur (2) zur Versteifung des Solargenerator-Paneels (1), **dadurch gekennzeichnet, dass** eine gleichzeitige Entfaltung des Solargenerator-Paneels (1) in zwei Raumrichtungen (x, y) erfolgt.

11. Verfahren nach Anspruch 10, **dadurch gekennzeichnet, dass** die gleichzeitige Entfaltung in zwei Raumrichtungen (x, y) zumindest teilweise durch Aufblasen von aufblasbaren Elementen der Stützstruktur (2) erfolgt.

12. Verfahren nach einem der Ansprüche 10 oder 11, **dadurch gekennzeichnet, dass** eine Faltung des Solargenerator-Paneels (1) zunächst in eine erste Raumrichtung (y) und anschließend in eine zweite Raumrichtung (x) erfolgt

13. Verfahren nach einem der Ansprüche 11 oder 12, **dadurch gekennzeichnet, dass** die gleichzeitige Entfaltung in zwei Raumrichtungen (x, y) durch ein Aufblasen einer rahmenförmigen Stützstruktur (2) erfolgt, welche das Solargenerator-Paneel (1) umschließt.
